# EUROPÄISCHE PATENTANMELDUNG

(11) **EP 2 610 773 A1**
(43) Veröffentlichungstag der Anmeldung: **03.07.2013**
(21) Anmeldenummer: 11195875.7
(22) Anmeldetag: 28.12.2011
(51) Int. Cl.: G06F 21/00

(54) **Verfahren zum Herstellen einer Hardwareeinrichtung und Hardwareeinrichtung**

(71) Anmelder: Siemens Aktiengesellschaft, 80333 München (DE)
(72) Erfinder: Gessner, Jürgen, 85661 Forstinning (DE); Schattleitner, Angela, 83104 Tuntenhausen (DE)

(57) **Zusammenfassung**

Es wird ein Verfahren zum Herstellen einer Hardwareinrichtung (1), insbesondere eines Trusted Platform Moduls zum Ausführen von mindestens einem kryptografischen Algorithmus (3) vorgeschlagen. Die Hardwareeinrichtung (1) entspricht einer Echtzeitklasse, d.h. sie erfüllt vorgebbare Laufzeitanforderungen für sogenannte Realtimeanwendungen. Das Herstellungsverfahren umfasst die Schritte: Bereitstellen (S1) von mindestens einem kryptografischen Algorithmus (3) in der Art eines Programmcodes; Bestimmen (S2) einer maximalen/längsten Ausführungszeit (WCET) für den Algorithmus (3); Fertigen (S3) eines manipulationsgeschützten Hardwarebausteins (1), welcher angepasst/eingerichtet ist, den Algorithmus (3) auszuführen; und Zuordnen (S4) des Hardwarebausteins (1) zu einer Echtzeitklasse in Abhängigkeit von der maximalen/längsten Ausführungszeit (WCET).

Entsprechend hergestellte Trusted-Platform-Module können zum Beispiel in Automatisierungsnetzwerke eingebunden werden, die offene Netze, z. B. das Internet als Kommunikationsweg nutzen. Die Echtzeitfähigkeit ermöglicht sichere Steuerungsaufgaben zu implementieren.

## Beschreibung

Die vorliegende Erfindung betrifft ein Verfahren zum Herstellen einer Hardwareeinrichtung, wie beispielsweise eines manipulationssicheren Hardwarebausteins in der Art eines Trusted Platform Moduls. Ferner wird eine entsprechende Hardwareeinrichtung vorgeschlagen.

Unter einem Trusted Platform Modul (TPM) versteht man einen Chip, der nach vorgegebenen Spezifikationen der Trusted Computing Group (TCG) gefertigt ist. Die TCG stellt dabei offene Standards für Trusted Computing Plattformen bereit, wobei unter Trusted Platform ein Chip oder eine Computerplattform verstanden wird, die sich für den vorgegebenen Zweck in einer vordefinierten Art und Weise zuverlässig verhält.

Eine entsprechende TPM-Hardware implementiert dabei als integrierte Schaltung oder Chip Sicherheitsfunktionen und kann in verschiedenen Einrichtungen, wie PCs, Notebooks, PDAs, Mobiltelefonen oder Netzwerkeinrichtungen in Netzwerken eingesetzt werden. Ein TPM umfasst dabei einen eindeutigen kryptografischen Schlüssel, der zur Identifizierung des Rechners, in dem das TPM eingesetzt ist, verwendet werden kann. In üblichen Anwendungen, beispielsweise für Personalcomputer, die mit TPM-Modulen ausgestattet sind, spielt die Rechengeschwindigkeit des TPMs meist keine Rolle. Auch kryptografische Koprozessoren in industriellen Anwendungen sind in der Regel nicht echtzeitfähig.

Es ist jedoch wünschenswert, in Bereichen mit Echtzeitanforderungen, wie beispielsweise der Automatisierungstechnik, auch zuverlässige echtzeitfähige Module bereitzuhalten, die insbesondere kryptografische Anwendungen implementieren. Es ist dabei in der Vergangenheit besonders schwierig gewesen, derartige Hardwareeinrichtungen zuverlässig zu spezifizieren. Es ist daher eine Aufgabe der vorliegenden Erfindung, ein verbessertes Verfahren zum Herstellen einer entsprechenden Hardwareeinrichtung bereitzustellen.

Demgemäß wird ein Verfahren zum Herstellen einer Hardwareeinrichtung, insbesondere eines Trusted Platform Moduls, zum Ausführen von mindestens einem, insbesondere kryptografischen, Algorithmus vorgeschlagen. Dabei ist die Hardwareeinrichtung vorzugsweise echtzeitfähig und entspricht zum Beispiel einer Echtzeitklasse einer Echtzeitklasse und das Verfahren umfasst die Schritte:
Bereitstellen von mindestens einem Algorithmus in der Art eines Programmcodes;
Bestimmen einer maximalen oder längsten Ausführungszeit für den Algorithmus;
Fertigen einer manipulationsgeschützten Hardwareeinrichtung, welche eingerichtet ist, den Algorithmus auszuführen; und
Zuordnen der Hardwareeinrichtung zu einer Echtzeitklasse in Abhängigkeit von der maximalen Ausführungszeit.

Die Hardwareeinrichtung, die auch als Chip, IC-Schaltkreis oder Hardwarebaustein bezeichnet werden kann, ist dabei vorzugsweise als ein Trusted Platform Modul ausgeführt. Dabei ist das TPM-Modul gemäß den TCG-Spezifikationen ausgestaltet. Es ist jedoch auch möglich, die Hardwareeinrichtung nach abweichenden aber ähnlichen Spezifikationen zu gestalten. Die jeweilige maximale oder längste Ausführungszeit für den Algorithmus, der beispielsweise in einem Programmcode wie C oder anderen Programmiersprachen vorliegen kann, wird zum Beispiel in Taktzyklen oder auch der Anzahl von Gleitkommaoperationen, die zur Durchführung des Algorithmus notwendig sind, angegeben.

Durch die Zuordnung in eine Echtzeitklasse, z.B. nach der Klassifizierung der IAONA oder nach IEC-61784-2, wird sichergestellt, dass die Hardwareeinrichtung den Algorithmus immer innerhalb der maximalen Ausführungszeit für den implementierten Algorithmus durchführt. Es sind somit Echtzeit- oder Real-Time-Anwendungen möglich. Dadurch eignet sich die Hardwareeinrichtung insbesondere zum Einsatz in Prozessautomatisierungen oder industriellen Automatisierungssystemen.

Als Algorithmus kommen für die Hardwareeinrichtung zum Beispiel Verschlüsselungs- oder Authentisierungsfunktionen und sicherer kryptografische Schlüsselspeicherungen in Frage. Bei der Auswahl oder Gestaltung des Algorithmus in Form Programmcodes werden vorzugsweise alle möglichen Ausführungspfade, die bei der Abarbeitung des Algorithmus auftreten können erfasst und registriert. Die Ausführungspfade können berechnet, festgestellt oder bestimmt werden. Der Algorithmus, welcher insbesondere eine kryptografische Funktion implementiert, kann noch in der Entwurfsphase beispielsweise in Form von UML-Modellierungen mit Hilfe von Uhren oder Timern im Hinblick auf die möglichen Ausführungspfade, also Programmdurchläufe, angepasst werden.

Das Verfahren umfasst vorzugsweise ferner das Erfassen, Berechnen, Feststellen oder Bestimmen der Ausführungszeiten bzw. der Berechnungszeiten für alle Ausführungspfade des Algorithmus. Durch Vergleich der Ausführungszeiten, beispielsweise gemessen anhand der notwendigen Taktzyklen, kann die maximal benötigte Zeit zur Durchführung des Algorithmus bestimmt werden. Diese maximale oder längste Ausführungszeit dient der Klassifikation des Hardwarebausteins bzw. der Hardwareeinrichtung, welche manipulationsgeschützt hergestellt wird.

Dabei kann der Hardwarebaustein zum Beispiel als FPGA oder ASIC implementiert werden. Insofern erhält man eine echtzeitfähige Hardwareeinrichtung mit kryptografischen Funktionen, die insbesondere zum Einsatz in Automatisierungsnetzwerken geeignet ist. Ein Verwender der entsprechenden Hardware weiß zuverlässig, wie schnell beispielsweise mit einer Antwort von dem Modul auf eine Anfrage zu rechnen ist.

Das Verfahren kann in einer Variante ferner umfassen: Vorgeben einer maximalen Datenlänge für einen Eingabeparameter, wobei der Algorithmus in Abhängigkeit von dem Eingabeparameter ausgeführt wird. Als Eingabeparameter sind zum Beispiel kryptografische Schlüssel denkbar, die mit ihrer Länge in Bits oder Bytes vorgegeben sind. Dadurch kann in der Entwurfs- und Herstellungsphase für die Hardwareeinrichtung eine standardisierte und begrenzte maximale Ausführungszeit erzielt werden. Die maximale Ausführungszeit wird auch als WCET (Worst Case Execution Time) bezeichnet.

Das Verfahren umfasst vorzugsweise: Kompilieren des Programmcodes mit Hilfe eines nichtoptimierenden Compilers. Es wird beispielsweise ein WCET-optimierender Compiler eingesetzt, und nicht wie sonst üblich ACET- OCET-optimierende Compiler (ACET = average case execution time, OCET = Optimal Case Execution Time). Der kompilierte Programmcode wird anschließend hardwäremäßig umgesetzt, so dass die Programmlogik als Hardware vorliegt. Um die maximale oder längste Ausführungszeit des Algorithmus zu bestätigen oder verifizieren, kann ein WCET-Analysetool eingesetzt werden. Unter WCET versteht man die schlechteste Ausführungszeit (Worst Case Execution Time).

Das Verfahren zum Herstellen einer Hardwareeinrichtung kann dahingehend erweitert werden, dass eine Serie von Hardwarebausteinen hergestellt wird, und jeder Hardwarebaustein einer Echtzeitklasse zugeordnet wird. Beispielsweise können Hardwarebausteine mit vorgebbaren Real-Time- oder Echtzeit-Spezifikationen hergestellt werden, die zu einem vorgegebenen Anwendungsumfeld verwendbar sind. Bei einer Echtzeitklasse zugeordneten Hardwarebausteinen wird der Algorithmus innerhalb der maximalen Ausführungszeit ausgeführt, was für den Verwender der Hardwareeinrichtung durch die Echtzeitklassifizierung zuverlässig angezeigt ist.

Es ist zum Beispiel möglich, dass die Hardwarebausteine einer jeweiligen Serie einen vorgegebenen Algorithmus ausführen und die Hardwarebausteine unterschiedlicher Serien unterschiedliche Algorithmen ausführen. Dabei können beispielsweise Algorithmen implementiert werden, welche ein Verfahren zur Hashwertberechnung, wie beispielsweise SHA-1, SHA-256, symmetrische Verschlüsselungsverfahren, wie DES, 2DES, AES, asymmetrische Verschlüsselungsverfahren, wie RSA, ECDSA, oder ein Verfahren zum Erzeugen einer Zufallszahl umsetzen.

Ferner wird ein Trusted-Platform-Modul vorgeschlagen, welches nach einem Verfahren, wie vorbeschrieben, hergestellt ist. Das Trusted-Platform-Modul kann in einer Rechnereinrichtung, wie beispielsweise einem PC oder in Einrichtungen eines Automatisierungssystems eingesetzt werden.

Weiterhin wird ein Computerprogrammprodukt vorgeschlagen, welches zumindest teilweise auf einer oder mehrerer programmgesteuerten Einrichtungen die Durchführung des wie oben erläuterten Verfahrens zum Herstellen einer Hardwareeinrichtung veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere ein programmgesteuertes Entwurfssystem für integrierte Schaltungen in Frage.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen des Verfahrens oder einer Hardwareeinrichtung. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: eine schematische Darstellung einer Echtzeitkommunikation mit einer ersten Ausführungsform einer Hardwareeinrichtung;
- Fig. 2: eine schematische Darstellung einer Ausführungszeitverteilung für eine Algorithmus zur Implementierung in einer Hardwareeinrichtung;
- Fig. 3: eine schematische Darstellung eine Ausführungsform einer Challenge-Response-Anordnung mit einem Trusted-Platform-Moduls als Hardwareeinrichtung;
- Fig. 4: ein schematisches Ablaufdiagramm zur Erläuterung einer Variante eines Verfahrens zum Herstellen einer Hardwareeinrichtung;
- Fig. 5: ein Teil eines schematischen Ablaufdiagramms zur Erläuterung einer weiteren Variante eines Verfahrens zum Herstellen einer Hardwareeinrichtung; und
- Fig. 6: eine schematische Darstellung eines Teils eines Programmcodes zur Erläuterung einer Ausführungspfadbestimmung.

In den Figuren sind gleiche oder funktionsgleiche Elemente mit denselben Bezugszeichen versehen worden, sofern nichts anderes angegeben ist.

Echtzeitfähige Hardwareeinrichtungen, die in der Art von Trusted Platform Modulen eingerichtet sind, stellen kryptografische Funktionen für die Zugangskontrolle, zum Ver-/Entschlüsseln sowie zum Authentisieren in Echtzeit zur Verfügung. Als Echtzeitanwendung kommt insbesondere ein Automatisierungssystem in Frage, wobei Automatisierungseinrichtungen mit entsprechenden TPMs ausgestattet werden und über weit verzweigte Kommunikationsnetze, insbesondere offene Netze, miteinander kommunizieren. Dabei ist es besonders wünschenswert, das TPM als Echtzeitanwendung vorzusehen.

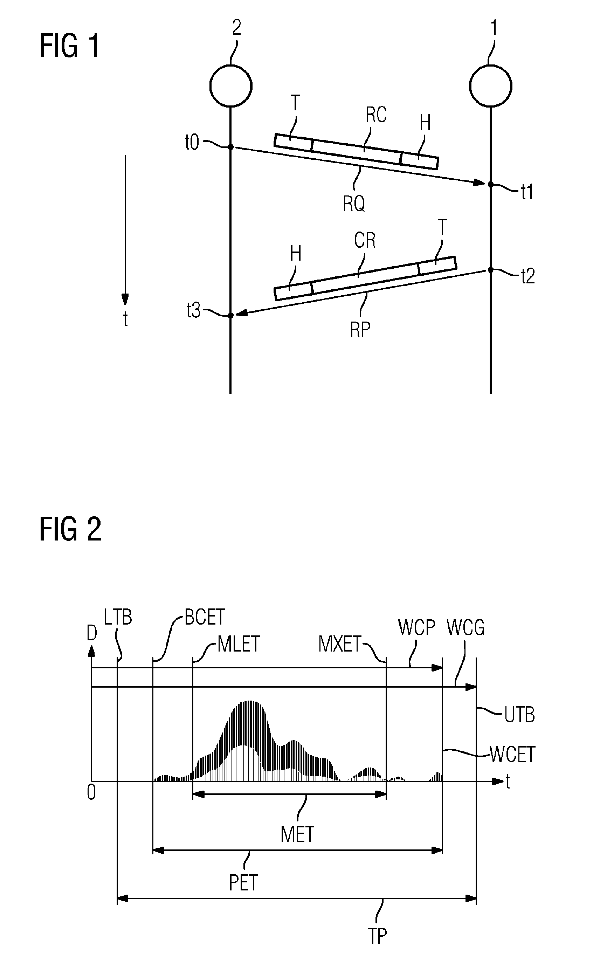

In einer üblichen Challenge-Response-Anordnung wird, wie es in der Fig. 1 schematisch dargestellt ist, von einer Master-Einrichtung 2 eine Anfragenachricht RQ an das TP-Modul bzw. die manipulationsgeschützte Hardwareeinrichtung 1 gesendet. Die erfolgt zum Zeitpunkt t0. Dabei ist die Hardwareeinrichtung 1 mit einem, wie in der Folge beschriebenen, Verfahren hergestellt. Das TP-Modul 1 ist dabei insbesondere nach TCG-Spezifikationen ausgeführt. Das heißt, insbesondere ein Endorsement-Key ist eindeutig zugeordnet, wobei der private Teil des Schlüssels in dem TPM abgelegt ist und nicht auslesbar ist. Es ist ein Storage-Route-Key abgespeichert, wie auch ein Attestation-Identity-Key. Ferner ist ein sicherer Zufallszahlengenerator in dem Trusted-Platform-Modul 1 implementiert. Darüber hinaus können Sicherheitsfunktionen, wie Versiegelung, Auslagerung, Schutz kryptografischer Schlüssel, eine Bescheinigung durch Attestationsverfahren wie Privacy-CA oder Direct-Anonymous-Attestation, vorhanden sein.

Ein verbreiteter Algorithmus, der in der Art eines Computerprogramms bzw. Programmcodes vorliegen kann, ist die Berechnung eines Hash-Wertes, beispielsweise als HMAC-SHA1. Dies ist in der Fig. 1 beispielhaft angedeutet. Die Master-Einrichtung 2 sendet zum Zeitpunkt t0 eine Anfragenachricht RQ (Request) über ein geeignetes Kommunikationsnetzwerk, das beispielsweise das Internet sein kann oder auch eine drahtlose Netzwerkverbindungen gemäß einem bekannten Protokoll, an die Hardwareeinrichtung 1, welche als Trusted-Platform-Modul ausgeführt ist. Dabei umfassen die übertragenen Daten einen Header H, einen Trailer T und Zufallsanfragedaten, die auch als Random Challenge RC bezeichnet werden. Die Anfrage RQ wird zum Zeitpunkt t1 von dem TPM erfasst.

Auf die diese Random Challenge RC berechnet die Hardwareeinrichtung 1 eine Challenge Response CR = HMAC-SHA1 (RC, SS). Dabei wird ein gemeinsames Passwort bzw. Shared Secret SS verwendet.

Nach der Berechnung zum Zeitpunkt t2 sendet das TPM 1 eine Anfrage-Antwort bzw. Challenge Response CR. Wieder umfassen die übertragenen Daten einen Header H und einen Trailer T. Zum Zeitpunkt t3 erhält die Master-Einrichtung 2 die Antwortnachricht CR.

Der Zeitverlauf ist in der Fig. 1 von oben nach unten orientiert dargestellt. Insbesondere bei der Übertragung in offenen Netzwerken, wie dem Internet, ist eine Echtzeitberechnung, das heißt eine Lieferung der Challenge Response CR innerhalb einer vorgegebenen Zeit notwendig. Das dargestellte Trusted-Platform-Modul 1 ist als echtzeitfähiges Trusted-Platform-Modul implementiert. Das heißt, die Bearbeitungszeit oder Ausführungszeit für den Algorithmus, welcher die Kryptofunktion, beispielsweise die Berechnung des Hashes vollzieht, ist deterministisch und durch die Hardware vorgegeben. In dem dargestellten Beispiel ist die längste oder maximale Ausführungszeit zum Erzeugen der Antwort CR t2 - t1. Man kann auch von der WCET = t2 - t1 sprechen.

Um die Echtzeitanforderung zu erfüllen, wird beim Entwurf und der Modellierung, beispielsweise über Unified Modelling Language (UML) und der Herstellung des Trusted-Platform-Moduls dieses berücksichtigt, wie im Folgenden weiter erläutert ist. Das Trusted-Platform-Modul 1 erhält somit eine Spezifikation, welche die Echtzeitfähigkeit des TPMs nachweist, und kann daher einer Echtzeitklasse zugeordnet werden. Man kann auch davon sprechen, dass das hergestellte Trusted-Platform-Modul 1 eine bestimmte Quality of Service (QoS) bereitstellt und kann daher in einer Umgebung, die echtzeitfähige Hard- und Software voraussetzt, eingesetzt werden.

Ein Vorteil von echtzeitfähigen Trusted-Platform-Modulen oder kryptografischen Modulen bzw. Hardwarebausteinen, besteht darin, dass diese besonders günstig in der Automatisierungstechnik eingesetzt werden können. Durch die erfüllten Echtzeitanforderungen des TPMs können diese derzeit übliche physikalische Sicherheitsmechanismen zwischen den eingesetzten Komponenten ersetzen, so dass der Einsatz von diesen echtzeitfähigen Trusted-Platform-Modulen besonders in offenen Netzen von Vorteil ist.

Als Echtzeitanforderung wird im Folgenden verstanden, dass eine deterministische Ausführungszeit eines vorgegebenen Algorithmus, wie beispielsweise eines kryptografischen Algorithmus, in einem vorgegebenen Kontext erfolgt. Unter allen Umständen ist dabei die vorgegebene maximale Ausführungszeit, beispielsweise die Lieferung einer Challenge Response, wie in der Fig. 1 angedeutet ist, gewährleistet. In der Regel versteht man unter Echtzeitanwendungen auch Berechnungen, die besonders schnell, also mit guter Performance, erfolgen. Durch die Angabe einer Echtzeitklasse für das Trusted-Platform-Modul, können die jeweiligen Anwendungsumgebungen sicher mit der deterministischen Berechnung von Algorithmen kalkulieren.

Zur Erläuterung von Ausführungszeitverteilungen für Algorithmen ist in der Fig. 2 beispielhaft eine Ausführungszeitverteilung D über die Zeit aufgetragen. In der Regel erfolgt die Berechnung oder Ausführung eines Algorithmus in Abhängigkeit von einem Eingabeparameter. Insofern kann bei verschiedenen Durchläufen des Algorithmus bzw. der Abarbeitung durch eine Hardware, eine unterschiedliche Ausführungszeit entstehen. Die Fig. 2 zeigt dabei zwischen einer unteren Laufzeitgrenze LTB (Lower Timing Bound) und einer oberen Laufzeitgrenze UTB (Upper Timing Bound), eine Verteilung von Ausführungszeiten für einen nicht näher spezifizierten Algorithmus. Beispielsweise kann dies die Bereitstellung einer Zufallszahl, ein Krypto-Algorithmus, ein Hash-Algorithmus oder andere in Trusted-Platform-Modulen notwendigen Berechnungen sein.

Die Verteilung ist unregelmäßig zwischen LTB und UTB gestreut. Die möglichen Ausführungszeiten liegen zwischen BCET, einer besten Ausführungszeit, die relativ kurz ist (Best Case Execution Time) und der schlechtesten Ausführungszeit WCET (Worst Case Execution Time). Die möglichen Ausführungszeiten sind mit PET gekennzeichnet (Possible Execution Times). Es ist ferner eine minimale gemessene Ausführungszeit MLET und eine maximale gemessene Ausführungszeit MXET angegeben.

Zur Angabe und Einordnung eines Trusted-Platform-Moduls in eine Echtzeitklasse ist es notwendig, für die implementierte Hardware, welche die Programmlogik des Algorithmus abbildet, die maximale oder längste Ausführungszeit WCET zu bestimmen. Einflussfaktoren auf die WCET sind die Programmlogik und die Umsetzung in einen entsprechenden Maschinencode. Außerdem hängt die WCET von der Architektur und Taktfrequenz der eingesetzten Hardware ab, und ferner ist die Größe oder Länge der Eingangsdaten ein Faktor, welcher die WCET beeinflusst.

Der in dem Trusted-Platform-Modul zu implementierende Algorithmus wird beispielsweise in der Art von Programmablaufplänen nach DIN 66001 oder anderen Kontrollflussgraphen mit Hilfe von UML dargestellt. Anhand von Programmablaufplänen lassen sich Ablaufpfade innerhalb der Programme spezifizieren, die unterschiedliche Längen haben. Im Folgenden werden insbesondere symmetrische und asymmetrische Kryptografie-Algorithmen, Hash-Algorithmen und Zufallszahlengeneratoren betrachtet. Diese sind in der Regel in Trusted-Platform-Modulen implementiert.

Als Hardwareimplementierung kommen insbesondere ASICs oder FPGAs in Frage. Eine anwendungsspezifische, integrierte Schaltung (ASIC = Application Specific Integrated Circuit) ist als integrierter Schaltkreis realisiert, wobei die Funktion praktisch nicht mehr manipulierbar ist. Dabei können ASICs als System on a Chip (SoC) mit Speichern, Mikroprozessoren und dergleichen ausgestattet werden.

Field Programmable Gate Arrays (FPGAs) können ebenfalls zur Realisierung von manipulationsgeschützten Hardwareeinrichtungen wie Trusted-Platform-Modulen verwendet werden.

Bei der Herstellung des Trusted-Platform-Moduls wird nun, um eine deterministische Berechnungszeit oder um einen WCET zu erhalten, die Größe oder Datenlänge der Eingabedaten festgelegt. Beispielsweise können Daten nach dem Profinet-Standard in der Art eines Datagramms (wie in der Fig. 1 angedeutet ist) Verwendung finden. Die Datenmenge in einem Profinet-Datagramm, beispielsweise mit Header und Trailer sowie den jeweiligen Daten, kann somit von Anfang an festgelegt werden, so dass beim Programmfluss die Ausführungszeit für alle Pfade im Programmcode erfasst werden können. Dabei können auch Fehlersituationen erfasst werden, so dass die maximale Ausführungszeit als längste aller möglichen Pfadausführungszeiten bestimmt wird. Man kann auch von einer statischen Analyse des Programmablaufs sprechen.

Die maximale Ausführungszeit wird dann zum Beispiel in der Anzahl der notwendigen Taktzyklen für den längsten Ausführungspfad bestimmt. Alternativ oder ergänzend können auch Verfahren wie Parse-Baum basierte Verfahren oder Ausführungszeitenmodellierungen verwendet werden.

Insbesondere bei der Verarbeitung von kryptografischen Schlüsseln oder Initialisierungsdaten als Eingabeparameter für den Algorithmus, wird die Datenlänge, beispielsweise in der Anzahl der Bits oder Bytes, fest vorgegeben, so dass eine maximale Ausführungszeit zuverlässig bestimmt werden kann.

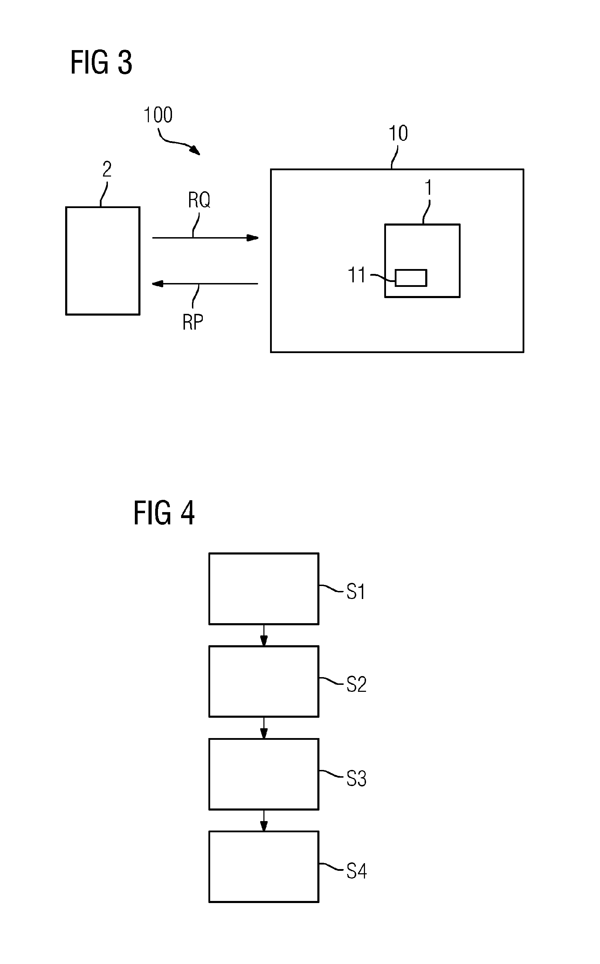

In der Fig. 3 ist eine schematische Darstellung einer Ausführungsform einer Challenge-Response-Anordnung 100 mit einem Trusted-Platform-Modul 1 als Hardwareeinrichtung dargestellt.

In den Fig. 4, 5 und 6 sind Varianten und Teile eines Ablaufdiagramms zur Erläuterung eines Herstellungsverfahrens für das Trusted-Platform-Modul 1 angegeben. Ziel des Herstellungsverfahrens ist es, insbesondere, wie bereits in der Fig. 1 angedeutet ist, eine Rechnereinrichtung, wie beispielsweise eine Automatisierungseinrichtung 10 zu schaffen, die mit einem Trusted-Platform-Modul 1 ausgestattet ist, das echtzeitfähig ist. Das Trusted-Platform-Modul 1 umfasst dabei einen Speicher 11 für kryptografische Schlüssel vorgegebener Länge. Eine Master-Einrichtung 2 sendet eine Anfrage RQ und erhält nach deterministischer Berechnung der Antwort RP durch das Trusted-Platform-Modul 1 eine Antwort. Dadurch kann sichergestellt werden, dass die Automatisierungseinrichtung 10 beispielsweise zu dem zugehörigen Automatisierungsnetzwerk gehört und sich gegenüber der Master-Einrichtung 2 rechtzeitig legitimiert.

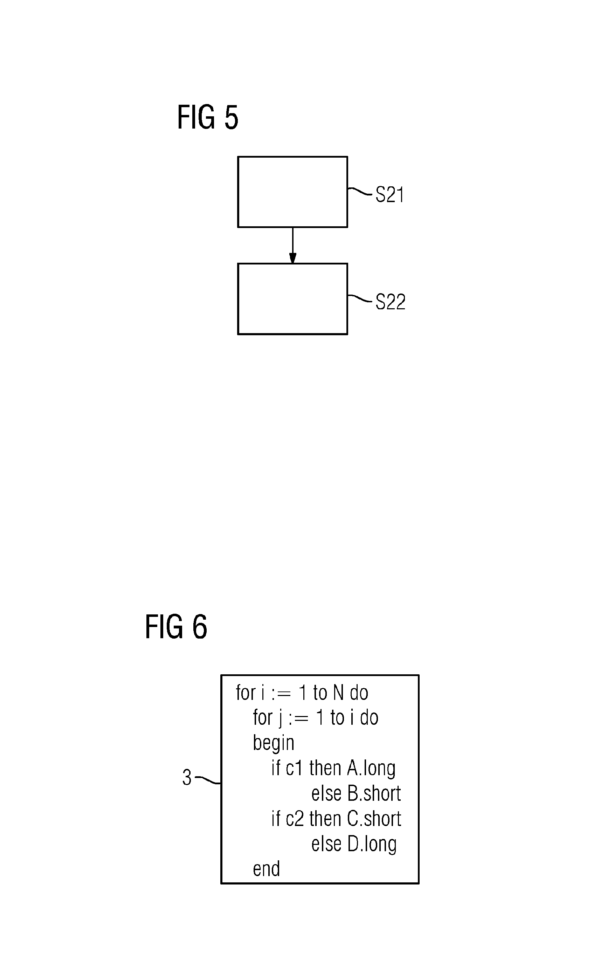

Um das Trusted-Platform-Modul 1 zuverlässig herzustellen, werden in einem ersten Schritt S1 des Herstellungsverfahrens mindestens ein Algorithmus, wie beispielsweise ein Algorithmus zur Berechnung eines Hash-Wertes oder ein Zufallszahlengenerator oder ein symmetrischer oder asymmetrischer Verschlüsselungs-Algorithmus angegeben. Der Algorithmus wird in der Art eines Programmablaufcodes bereitgestellt. Beispielsweise ist in der Fig. 6 ein Teil eines beispielhaften Algorithmus 3 angedeutet. Es ist auch möglich, Hardwareeinrichtungen herzustellen, die mehrere Algorithmen realisieren. Es wird im Schritt S1 der Fall betrachtet, in dem beispielhaft nur ein Algorithmus 3 vorgesehen ist.

Im Folgeschritt S2 wird die maximale oder längste Ausführungszeit für den Algorithmus 3 bestimmt. Als die längste oder maximale Ausführungszeit für den vorgegebenen Algorithmus 3 beeinflussende Faktoren sind insbesondere vorgegebene Eingabeparameter wie Kryptoparameter, Schlüssellänge, Algorithmus und dergleichen zu nennen. Auch die von dem Algorithmus ausgegebenen Parameter sowie vorgegebene Reaktionen des Algorithmus im Fehlerfall, werden festgelegt. Beispielsweise wird beim Zugriff auf den kryptografischen Schlüssel im Speicher 11 des Trusted-Platform-Moduls 1 auch die Zugriffszeit von der verwendeten Ladesoftware oder Funktion mitbestimmt. Der Typ des Speichers und die Länge des Schlüssels sind somit deterministisch angebbar, so dass die längste oder maximale Ausführungszeit WCET in Abhängigkeit von diesen Faktoren bestimmt werden kann.

Ferner wird, wie in der Fig. 5 angedeutet ist, in einem Schritt S21 eine Erfassung aller möglichen Ausführungspfade des Algorithmus 3 durchgeführt. Das bedeutet, ein Algorithmus, der beispielsweise als Programmcode oder UML dargestellt ist, wird derart analysiert, dass alle möglichen Ausführungspfade bekannt sind. Anschließend werden alle möglichen Ausführungszeiten der erfassten Ausführungspfade des Algorithmus 3 im Schritt S22 gemessen oder berechnet. Die Ausführungszeit wird beispielsweise in der Anzahl von Gleitkommaberechnungen oder auch Taktzyklen angegeben.

Am Beispiel des Algorithmus, wie er in der Fig. 6 dargestellt ist, werden beispielsweise in einer äußeren Schleife N mögliche Schleifendurchläufe gestartet, in der inneren Schleife, welche vom Laufparameter J abhängt, ebenfalls N Durchläufe. Insgesamt ergeben sich in dem Programmabschnitt zwischen "begin" und "end" (N +1)N/2 Ausführungen. Bei komplexeren Algorithmen, beispielsweise zur Berechnung von Hash-Werten oder symmetrische oder asymmetrische Kryptoalgorithmen wie DES, AES, RSA oder ECDSA ergibt sich eine ähnliche Anzahl von Ablaufpfaden, die jeweils betrachtet werden können. Als Ergebnis erhält man eine maximale Laufzeit WCET des zu implementierenden Algorithmus, welche dem längsten Ablaufpfad entspricht.

Anschließend erfolgt eine Implementierung des Algorithmus in der Art einer manipulationsgeschützten Hardwareeinrichtung. Damit ist insbesondere ein Trusted-Platform-Modul als Chip und ASIC gemeint. Insbesondere ein Trusted-Platform-Modul, welches als ASIC implementiert ist, kann nach der Fertigung nicht mehr geändert werden. Insofern ist die deterministische maximale Laufzeit WCET durch den Herstellungsprozess in den Verfahrensschritten S1 bis S3 festgelegt. Anschließend kann durch den Hersteller, je nach verwendeter Technologie, ein Bereich für die jeweilige Taktfrequenz angegeben werden. In Abhängigkeit von der Taktfrequenz für den Trusted-Platform-Modul als ASIC ist es möglich, die maximale Ausführungszeit WCET beispielsweise in Milli- oder Nanosekunden anzugeben. Insofern ist es dem Hersteller möglich, das hergestellten Trusted-Platform-Modul in eine Echtzeitklasse zu klassifizieren. Dies erfolgt im Schritt S4 in Abhängigkeit von der deterministischen, durch die Verfahrensschritte S1 bis S3 definierte, maximalen Ausführungszeit für den im Trusted-Platform-Modul implementierten Algorithmus.

Es ist dabei möglich, verschiedene Typen von Trusted-Platform-Modulen zu erzeugen, die für verschiedene Echtzeitanforderungen geeignet sind. Im Betrieb beim Anwender wird dann ein Trusted-Platform-Modul aus einer vorgegebenen Echtzeitklasse gewählt, die dem Anwendungsgebiet entgegen kommt. Wird ein Trusted-Platform-Modul beispielsweise in einem Sensornetzwerk eingesetzt, wobei die Sensoren nur selten Sensorsignale an eine Überwachungseinrichtung liefern, genügt beispielsweise die Verwendung von langsamen Trusted-Platform-Modulen einer Echtzeitklasse, die einer vergleichweise hohen WCET entspricht.

Es ist auch möglich den Hardwarebaustein bzw. das Trusted-Platform-Modul 1 als teilprogrammierbaren FPGA zu implementieren. Beispielsweise kann dann ein FPGA als TPM vom Anwender hinsichtlich der Echtzeitanforderungen weiter angepasst werden. Beispielsweise können die kryptografischen Funktionen, Taktfrequenzen, die Ein- und Ausgabebreite oder der eingesetzte interne Speicher 11 festgelegt werden. Dennoch ist es möglich, durch die Klassifizierung während der Herstellung in Echtzeitklassen, eine deterministische maximale Ausführungszeit festzulegen.

In Ergänzung oder alternativ zu den vorgeschlagenen Maßnahmen zum deterministischen Festlegen einer Echtzeitanforderung für ein Trusted-Platform-Modul, kann ein initialer Schlüssel als so genannter Trust-Anker auf dem Trusted-Platform-Modul selbst zugriffsgeschützt festgelegt sein. Die daraus abgeleiteten kryptografischen Schlüssel können dann auf anderen Speichermedien im Gerät, in das ein Trusted-Platform-Modul eingesetzt ist, permanent oder flüchtig abgelegt werden. Dadurch müssen nicht alle notwendigen kryptografischen Schlüssel innerhalb des TPMs abgespeichert werden. In die Bestimmung der WCET geht dann auch die für die Entschlüsselung der außerhalb des TPMs angelegten Daten ein.

Insbesondere die Berechnung von symmetrischen Algorithmen ist unabhängig von den Eingabedaten und den Schlüsseln immer gleich, so dass eine gute deterministische und reproduzierbare Berechnungsdauer oder Ausführungszeit des jeweiligen Algorithmus gegeben ist. Als Konfigurationsparameter für einen symmetrischen Algorithmus kann dieser an die jeweilige Anwendungsanforderung angepasst sein. Beispielsweise kann die Zeit oder Ausführungszeit zur Berechnung von Eingabeblöcken inklusive der benötigten Zeiten für die Ein- und Ausgabe sowie die Schlüsselbehandlung innerhalb des Trusted-Platform-Moduls, als Anzahl von Taktzyklen angegeben werden. Die sich ergebende Antwortzeit, beispielsweise für einen Eingabeblock, ist dann abhängig von der Taktfrequenz, die ebenfalls als Spezifikation des Trusted-Platform-Moduls angegeben werden kann.

Auch Hardwareimplementierungen von Hash-Algorithmen erlauben die Angabe der benötigten Ausführungszeit bzw. der maximal notwendigen Ausführungszeit in Abhängigkeit von Taktzyklen. Dies gilt, weil die Zeit für das Hashen eines Eingabeblocks unabhängig von dem Dateninhalt ist. Somit zeigt die benötigte Ausführungszeit für das Hashen von Daten nur linear mit der Anzahl der Eingabeblöcke an. Für typische Datenmengen in einem Anwendungsumfeld des Trusted-Platform-Moduls kann daher die Echtzeitantwortzeit angegeben werden. Beispielsweise kann ein entsprechendes echtzeitfähiges Trusted-Platform-Modul in Profinet-Umgebungen, Flash-Speichern, Firmwares etc. eingesetzt werden.

Bei der Implementierung von asymmetrischen Algorithmen kann in Abhängigkeit von der eigentlichen Hardwareimplementierung die benötigte Ausführungszeit auch von den eingegebenen Daten abhängen. Bei asymmetrischen Algorithmen wir RSA oder ECDSA ist es möglich, eine Maximalzahl von Taktzyklen durch Analyse des zu Grunde liegenden Algorithmus und seiner Ausführungspfade abzuschätzen. Auch damit ist eine Maximalzeit, also eine maximale Ausführungszeit für den Algorithmus anzugeben.

Bei Zufallszahlengeneratoren kann ein deterministischer Algorithmus eingesetzt werden, der hinsichtlich seiner Ausführungspfade analysierbar ist. Denkbar ist auch eine hardwaretechnische Unterstützung durch radioaktive oder physikalische Rauschwellen.

Insgesamt ergibt sich durch die echtzeitfähige manipulationssichere Hardwareeinrichtung in der Art eines Trusted-Platform-Moduls eine einfache Möglichkeit, echtzeitfähige Trusted-Platform-Module in offenen Netzen einzusetzen, was die sonst notwendigen physikalischen Sicherheitsmaßnahmen von vernetzten sicherheitsrelevanten Einrichtungen reduziert oder obsolet macht. Insbesondere ist eine Anwendung im Automatisierungsumfeld, beispielsweise der Ausstattung von vernetzten Automatisierungseinrichtungen mit entsprechenden echtzeitfähigen Trusted-Platform-Modulen, möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Herstellen einer Hardwareeinrichtung (1) zum Ausführen von mindestens einem Algorithmus (3), wobei die Hardwareeinrichtung (1) einer Echtzeitklasse entspricht, umfassend:
Bereitstellen (S1) von mindestens einem Algorithmus (3) in der Art eines Programmcodes,
Bestimmen (S2) einer maximalen Ausführungszeit (WCET) für den Algorithmus (3),
Fertigen (S3) einer manipulationsgeschützten Hardwareeinrichtung (1), welche eingerichtet ist, den Algorithmus (3) auszuführen,
Zuordnen (S4) der Hardwareeinrichtung (1) zu einer Echtzeitklasse in Abhängigkeit von der maximalen Ausführungszeit (WCET).

2. Verfahren nach Anspruch 1, ferner umfassend:
Erfassen (S21) aller möglichen Ausführungspfade des Algorithmus (3).

3. Verfahren nach Anspruch 1 oder 2, ferner umfassend:
Erfassen (S22) der Ausführungszeiten (MET) für alle Ausführungspfade des Algorithmus (3).

4. Verfahren nach einem der Ansprüche 1 - 3, ferner umfassend:
Vorgeben einer maximalen Datenlänge für einen Eingabeparameter (RC), wobei der Algorithmus (3) in Abhängigkeit von dem Eingabeparameter (RC) ausgeführt wird.

5. Verfahren nach Anspruch 4,
**dadurch gekennzeichnet, dass**
ein kryptografischer Initialschlüssel mit einer vorgegebenen Datenlänge als ein Standardeingabeparameter festgelegt wird.

6. Verfahren nach einem der Ansprüche 1 - 5, ferner umfassend:
Kompilieren des Programmcodes mit Hilfe eines nichtoptimierenden Compilers.

7. Verfahren nach einem der Ansprüche 1 - 6, ferner umfassend:
Bestätigen der maximalen Ausführungszeit (WCET) mit Hilfe eines WCET-Analysetools.

8. Verfahren nach einem der Ansprüche 1 - 7,
**dadurch gekennzeichnet,**
**dass** die Ausführungszeit (MET) als eine Anzahl der benötigten Taktzyklen oder Gleitkommaoperationen bestimmt wird.

9. Verfahren nach einem der Ansprüche 1 - 8,
**dadurch gekennzeichnet,**
**dass** die Hardwareeinrichtung (1) als ein FPGA oder ASIC gefertigt wird.

10. Verfahren nach einem der Ansprüche 1 - 9,
**dadurch gekennzeichnet,**
**dass** die einer Echtzeitklasse zugeordneten Hardwareeinrichtunggen (1) den Algorithmus (3) innerhalb der maximalen Ausführungszeit (WCET) ausführen.

11. Verfahren nach einem der Ansprüche 1 - 10,
**dadurch gekennzeichnet,**
**dass** eine Serie von Hardwareeinrichtungen (1) hergestellt wird und jede Hardwareeinrichtung (1) einer Echtzeitklasse zugeordnet wird.

12. Verfahren nach einem Anspruch 11,
**dadurch gekennzeichnet, dass**
die Hardwareeinrichtungen (1) einer jeweiligen Serie einen vorgegebenen Algorithmus (3) ausführen und die Hardwareeinrichtungen (1) unterschiedlicher Serien unterschiedliche Algorithmen ausführen.

13. Verfahren nach einem der Ansprüche 1 - 12,
**dadurch gekennzeichnet,**
**dass** der Algorithmus (3) ein Verfahren zur Hashwertberechnung, insbesondere SHA-1, SHA-256, ein symmetrisches Verschlüsselungsverfahren, insbesondere DES, 2DES, AES, ein asymmetrisches Verschlüsselungsverfahren, insbesondere RSA, ECDSA, oder ein Verfahren zum Erzeugen einer Zufallszahl implementiert.

14. Trusted-Platform-Modul, welches nach einem Verfahren gemäß einem der Ansprüche 1 - 13 hergestellt ist.

15. Rechnereinrichtung mit einer Hardwareeinrichtung (1), welche nach einem Verfahren gemäß einem der Ansprüche 1 - 13 hergestellt ist.
